# FASCICULE DE BREVET EUROPEEN

(11) **EP 1 036 443 B1**
(45) Date de publication et mention de la délivrance du brevet: **28.01.2004**
(21) Numéro de dépôt: 98955644.4
(22) Date de dépôt: 13.11.1998
(51) Int. Cl.: H04J 3/16

(54) **TRAME NUMERIQUE POUR STATION HERTZIENNE**
DIGITALES RAHMEN FÜR EINE RICHTFUNKÜBERTRAGUNGSSTATION
DIGITAL FRAME FOR RADIO-RELAY STATION

(30) Priorité: 02.12.1997 FR 9715271
(43) Date de publication de la demande: 20.09.2000
(73) Titulaire: SAGEM S.A., 75015 Paris (FR)
(72) Inventeur: FORCE, Claude, F-91800 Brunoy (FR)
(74) Mandataire: Cabinet Martinet & Lapoux
(86) Numéro de dépôt international: PCT/FR1998/002417
(87) Numéro de publication internationale: WO 1999/029061

(56) Documents cités:
- EP-A- 0 073 043
- WO-A-86/06231
- US-A- 4 631 720

## Description

La présente invention concerne une trame numérique ayant une durée prédéterminée résultant du multiplexage de signaux numériques plésiochrones, ainsi qu'un procédé pour former une telle trame.

L'invention est particulièrement mise en oeuvre dans une station hertzienne qui comprend un équipement transmetteur et récepteur essentiellement numérique, situé à la base de la station, et un équipement d'émission et de réception à radiofréquence situé par exemple sur le sommet d'un bâtiment ou d'un pylône et relié par câble de transmission au premier équipement.

Un groupe de signaux numériques plésiochrones ayant des débits normalisés par exemple à 2,048 Mbit/s ou 8,448 Mbit/s est appliqué à l'équipement transmetteur et récepteur qui les multiplexe en une trame particulière. A chaque groupe de signaux plésiochrones correspond une station hertzienne particulière.

Toutefois, les exploitants de faisceaux hertziens sont de plus en plus confrontés à optimiser leurs stations hertziennes pour les adapter à l'évolution des demandes des clients. Pour un faisceau hertzien donné, si par exemple les stations échangeant un signal multiplex à 2 x 2 Mbit/s doivent échanger un signal multiplex à 4 x 2 Mbits/s ou à 8 Mbit/s, de nombreux circuits doivent être modifiés et changés dans toutes les stations pour les adapter aux caractéristiques notamment de débit et de trame du nouveau signal multiplex à transmettre.

Le document US-A-4 631 720 décrit une méthode pour transmettre des signaux ayant des débits différents, par multiplexage en temps, où la fréquence de la trame multiplexée est selectionnée comme étant égal au débit le plus petit des signaux à transmettre, et une unité d'information du signal ayant le débit le plus petit est transmise par trame.

La présente invention vise à réduire le coût d'une station hertzienne en y introduisant des circuits qui sont sélectionnables et programmables en fonction des débits de signaux plésiochrones à multiplexer dans un groupe quelconque sélectionné parmi plusieurs groupes de signaux plésiochrones, afin que la station hertzienne soit exploitable quels que soient les débits des signaux du groupe sélectionné. Plus particulièrement, l'invention fournit une trame numérique de durée prédéterminée qui contribue à atteindre cet objectif.

A cette fin, une trame numérique ayant une durée prédéterminée résultant du multiplexage de signaux numériques plésiochrones, est caractérisée en ce qu'elle comprend des motifs ayant une structure commune et une longueur prédéterminée qui sont indépendantes des débits de signaux numériques plésiochrones à multiplexer d'un groupe sélectionné parmi plusieurs groupes de signaux numériques plésiochrones ayant des débits sensiblement multiples entre eux, les motifs comprenant des bits supplémentaires en nombre prédéterminé et des bits en nombre prédéterminé respectivement de signaux synchrones ayant des débits multiples entre eux et résultant d'une synchronisation des signaux numériques plésiochrones du groupe sélectionné, à chaque signal numérique plésiochrone du groupe sélectionné étant attribué un nombre de motifs dans la trame égal à la partie entière du quotient de la division du débit dudit chaque signal numérique plésiochrone du groupe sélectionné par le plus petit débit des signaux numériques plésiochrones.

En général, le nombre des motifs de la trame est égal à la partie entière du quotient de la division de la somme des débits de signaux numériques plésiochrones du groupe sélectionné par le plus petit débit des signaux numériques plésiochrones, et ainsi relativement adapté aux demandes des clients.

La structure de la trame est modulaire et la structure des motifs est constante quels que soient les débits des signaux plésiochrones des groupes, ce qui permet d'utiliser les mêmes circuits dans des moyens d'émission et de réception d'une station hertzienne, indépendamment du débit du signal multiplex comportant la trame et correspondant au groupe sélectionné. Comme on le verra dans la description ultérieure de réalisations préférées de l'invention, ces circuits sont seulement programmables en fonction du débit du signal multiplex. Les motifs de la trame ont une capacité de transmission individuelle constante.

Bien souvent, plusieurs signaux plésiochrones au plus petit débit sont destinés à un même équipement terminal. Ceux-ci peuvent donc être multiplexés en un signal synchrone. Dans ce cas, ledit quotient est remplacé par le quotient de la division du débit dudit chaque signal numérique plésiochrone du groupe sélectionné par le produit du plus petit débit des signaux numériques plésiochrones et d'un entier prédéterminé qui est égal à un sous-multiple de la partie entière du quotient de la division du débit de signaux plésiochrones juste supérieur audit plus petit débit par ledit plus petit débit, un signal synchrone correspondant au groupe sélectionné ayant le plus petit débit résultant de synchronisation et multiplexage de signaux numériques plésiochrones au plus petit débit et en nombre égal à l'entier prédéterminé, et un seul motif étant attribué dans la trame audit signal synchrone ayant le plus petit débit.

En pratique, les bits supplémentaires sont répartis en un mot de verrouillage, un champ d'affectation constante, un champ d'affectation variable en fonction du débit d'un signal multiplex comportant la trame correspondant au groupe sélectionné, et un champ de code correcteur d'erreurs, lesdits champs ayant des longueurs respectives prédéterminées.

Le champ d'affectation constante comprend par exemple des bits de synchronisation de trame, et de préférence des bits de collecte d'informations d'erreurs et/ou des bits de qualité.

Le champ d'affectation variable peut comprendre des bits d'une voie auxiliaire dont le débit offert est d'autant plus élevé que le débit du signal multiplex est élevé. Le champ d'affectation variable peut également comprendre des bits qui sont réservés à un nombre prédéterminé de voies de transmission téléphonique et/ou de données et qui sont en nombre d'autant plus faible que le débit du signal multiplex est élevé. Le champ d'affectation variable peut comprendre encore des bits assignés à une voie de service téléphonique qui sont en nombre d'autant plus faible que le débit du signal multiplex est élevé ; le champ d'affectation constante comprend alors un bit signalant un appel dans la voie de service téléphonique.

L'invention concerne également un procédé pour former la trame numérique définie ci-dessus. Il est caractérisé par les étapes suivantes : constituer des groupes de signaux numériques plésiochrones parmi plusieurs signaux numériques plésiochrones donnes ayant des débits sensiblement multiples entre eux, les sommes des débits des signaux numériques plésiochrones dans les groupes étant sensiblement multiples entre elles, sélectionner l'un des groupes de signaux numériques plésiochrones, synchroniser les signaux numériques plésiochrones du groupe sélectionné en des signaux synchrones ayant des débits multiples entre eux, attribuer à chaque signal synchrone un nombre de motifs de structure prédéterminée dans la trame égal à la partie entière du quotient de la division du débit dudit chaque signal synchrone par le plus petit débit des signaux numériques plésiochrones, et former un signal multiplex comportant ladite trame en insérant dans chaque motif des bits du signal synchronisé respectif en nombre prédéterminé et des bits supplémentaires en nombre prédéterminé.

Les signaux synchrones sont obtenus par constitution d'une trame composée d'un mot de synchronisation, de bits d'indication de justification et de bits du signal numérique plésiochrone correspondant de manière à élever le débit à un sous-multiple du plus grand débit des signaux synchrones.

Selon une variante, les signaux au plus petit débit sont synchronisés et multiplexés par groupe de deux. Dans ce cas, ledit quotient est remplacé par le quotient de la division du débit dudit chaque signal synchrone par le produit du plus petit débit des signaux numériques plésiochrones et d'un entier prédéterminé qui est égal à un sous-multiple de la partie entière du quotient de la division du débit de signaux plésiochrones juste supérieur audit plus petit débit par ledit plus petit débit. L'étape de synchroniser des signaux numériques plésiochrones a plus petit débit est remplacée par une étape a multiplexer et synchroniser les signaux numériques plésiochrones au plus petit débit par nombres égaux audit quotient de la division du débit dudit chaque signal synchrone par ledit produit en des signaux synchrones, lorsque ledit groupe sélectionné comprend des signaux numériques plésiochrones au plus petit débit en nombre égal au moins audit quotient.

Selon un aspect avantageux de l'invention, un équipement transmetteur et récepteur pour station hertzienne présente un aspect modulaire et programmable afin de réduire le coût de fabrication de celui-ci. Plus particulièrement, le procédé comprend les étapes de :
- fournir plusieurs moyens modulaires de synchronisation pour synchroniser les signaux numériques plésiochrones, et
- mettre en fonctionnement des moyens de synchronisation en nombre égal aux signaux numériques plésiochrones du groupe sélectionné et programmés en fonction des débits de ceux-ci.

Lorsque le signal résultant doit être transmis à travers un support de transmission à débit prédéterminé, tel que le câble de transmission entre les équipements d'une station hertzienne, le débit du signal multiplex est au plus égal au débit constant dans le support de transmission, et le signal multiplex est suréchantillonné avec un rapport de suréchantillonnage entre le débit de support de transmission et le débit du signal multiplex de manière à transmettre un signal suréchantillonné au débit constant dans le support de transmission quel que soit le débit du signal multiplex et donc quels que soient les débits des signaux numériques plésiochrones du groupe sélectionné.

Dans une station hertzienne où le support de transmission, tel que câble, relie un équipement transmetteur et récepteur à la base de la station hertzienne et un équipement d'émission et de réception à radiofréquence de la station hertzienne, le procédé comprend dans l'équipement à radiofréquence, une étape de sous-échantillonner le signal suréchantillonné avec l'inverse du rapport de suréchantillonnage et une étape de sélectionner des filtres de fréquence en fonction du rapport de suréchantillonnage. Les largeurs des bandes de fréquence des filtres sélectionnés augmentent avec le débit du signal multiplex.

Selon un autre aspect du procédé de l'invention, l'insertion du champ de bits supplémentaires dans la trame comprend des insertions d'un mot de verrouillage de trame, d'un champ d'affectation constante, d'un champ d'affectation variable en fonction du débit du signal multiplex sélectionné, et d'un champ de code correcteur d'erreurs, lesdits champs ayant des longueurs respectives prédéterminées.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'une station hertzienne émettant une trame selon l'invention ;
- la figure 2 est un bloc-diagramme schématique d'un dispositif de multiplexage inclus dans un équipement transmetteur et récepteur de la station hertzienne particulièrement pour la mise en oeuvre du procédé de formation de trame selon l'invention ;
- la figure 3 est un diagramme de signaux illustrant schématiquement la formation de trames de synchronisation pour deux signaux numériques plésiochrones au même débit nominal et la formation d'une trame modulaire selon l'invention, dans le dispositif de multiplexage ;
- les figures 4 à 6 montrent respectivement trois trames de synchronisation pour des signaux synchrones à débits différents produits dans le dispositif de multiplexage ;
- la figure 7 montre une trame modulaire selon l'invention produite par le dispositif de multiplexage ;
- les figures 8 à 10 montrent la composition de champs d'affectation variable respectivement pour des modes de fonctionnement différents du dispositif de multiplexage ; et
- la figure 11 montre une structure de trame d'une voie auxiliaire dans un signal multiplex à débit maximal.

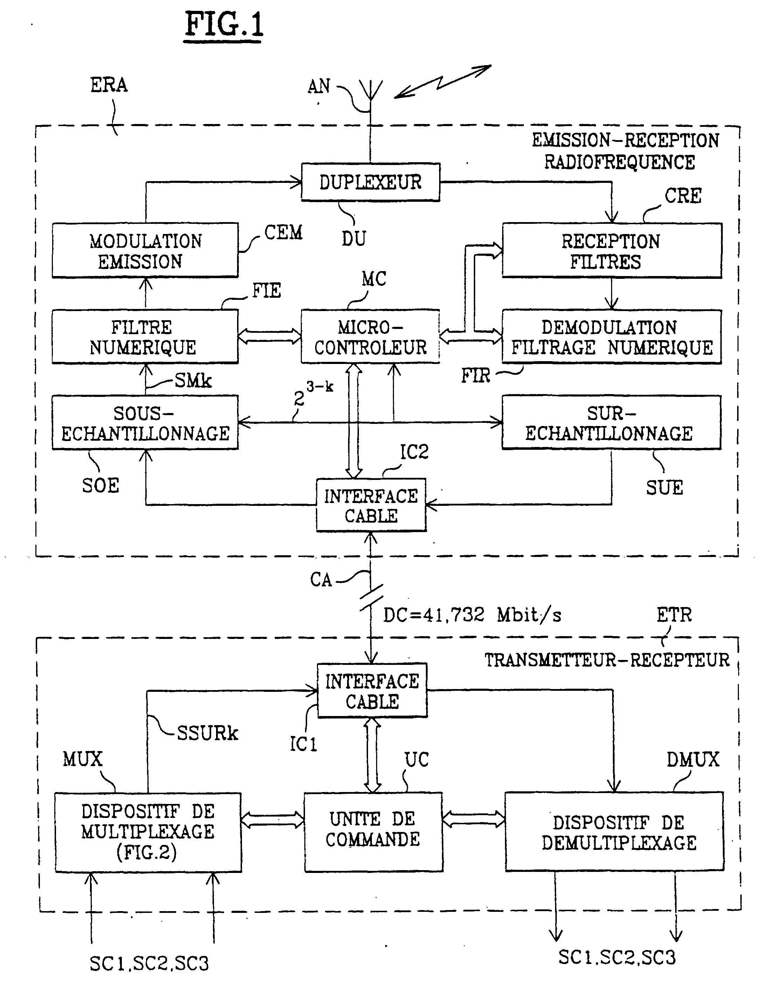

En référence à la figure 1, une station de liaison hertzienne comprend essentiellement un équipement transmetteur et récepteur de station ETR généralement installé à l'intérieur d'un bâtiment et un équipement d'émission et de réception à radiofréquence ERA situé soit sur le toit du bâtiment, soit sur un pylône à proximité du bâtiment. Les équipements sont reliés par un câble coaxial CA pour transmission bidirectionnelle ayant une longueur qui peut atteindre quelques centaines de mètres.

Le premier équipement ETR multiplexe à division du temps des signaux numériques plésiochrones composants SC1, SC2, SC3, par exemple qui ont traversé le réseau téléphonique commuté, en un signal multiplex ayant une trame modulaire selon l'invention à transmettre dans le câble CA avec un débit constant DC. Le deuxième équipement ERA génère un signal hyperfréquence à quelques gigahertz modulé par le signal résultant issu de l'équipement ETR pour l'émettre à travers une antenne AN. Les équipements ETR et ERA assurent également la réception d'un signal à haute fréquence contenant une trame modulaire selon l'invention et le démultiplexage de celui-ci en des signaux numériques plésiochrones.

Selon la réalisation illustrée à la figure 1, le premier équipement ETR comprend essentiellement un dispositif de multiplexage numérique MUX et un dispositif de démultiplexage numérique DMUX, une interface IC1 avec le câble CA, et une unité de commande à microprocesseur UC avec clavier. Le deuxième équipement ERA comprend essentiellement une interface IC2, un circuit de modulation et d'émission à haute fréquence CEM, un circuit de sous-échantillonnage SOE entre la sortie de l'interface IC2 et un filtre numérique programmable d'émission FIE précédant le circuit CEM, un circuit de réception à haute fréquence CRE, un duplexeur DU entre les circuits CEM et CRE et une antenne AN, un circuit de suréchantillonnage SUE entre un circuit de démodulation et filtrage numérique FIR succédant au circuit CRE et l'interface IC2, ainsi qu'un microcontrôleur MC. Comme on le verra dans la suite de la description, les modifications apportées par l'invention sont concentrées essentiellement dans les dispositifs de multiplexage et démultiplexage numériques MUX et DMUX, et dans une moindre mesure, dans l'équipement radio ERA au niveau des ensembles de circuits SOE-CEM et CRE-SUE.

La suite de la description présente en détail la constitution d'une trame numérique dans le dispositif de multiplexage MUX selon l'invention en fonction de valeurs numériques de débit, durée, fréquence et longueur exprimée en nombre de bits, indiquées à titre d'exemple.

Dans l'équipement transmetteur et récepteur ETR à la base de la station de liaison hertzienne, le dispositif de multiplexage MUX est susceptible de recevoir des signaux numériques plésiochrones composants SC1, SC2, SC3 ayant des débits normalisés à DE1 = 2,048 Mbit/s, DE2 = 8,448 Mbit/s et DE3 = 34,368 Mbit/s, c'est-à-dire ayant des débits sensiblement multiples entiers entre eux, puisque DE3 ≈ 4.DE2 et DE2 ≈ 4.DE1. Le débit DC dans le câble CA est constant et égal à 41,732 Mbit/s, ce qui impose, comme on le verra dans la suite, que la somme des débits des signaux plésiochrones à multiplexer ensemble, entrant dans l'équipement ETR, soit inférieure ou égale au débit maximum entrant DE3 = 34,368 Mbit/s.

La structure de trame selon l'invention transmise dans le câble CA est commune à quatre modes de fonctionnement M0 à M3 qui correspondent respectivement à des nombres de signaux plésiochrones au plus petit débit à 2,048 Mbit/s égaux aux quatre premières puissances de 2. Aux modes de fonctionnement correspondent respectivement des groupes de signaux plésiochrones dans le tableau 1 ci-après :

**TABLEAU 1**

| MODE | | GROUPES |
|---|---|---|
| M0 | 2x2 Mbit/s | 2 x 2,048 Mbit/s |
| M1 | 4x2 Mbit/s | 4 x 2,048 Mbit/s 8,448 Mbit/s |
| M2 | 8x2 Mbit/s | 8 x 2,048 Mbit/s 4 x 2,048 + 8,448 Mbit/s 2 x 8,448 Mbit/s |
| M3 | 16 x 2 Mbit/s | 16 x 2,048 Mbit/s 12 x 2,048 Mbit/s + 8,448 Mbit/s 8 x 2,048 Mbit/s + 2 x 8,448 Mbit/s 4 x 2,048 Mbit/s + 3 x 8,448 Mbit/s 4 x 8 Mbit/s 34,368 Mbit/s |

Ainsi, au minimum deux signaux multiplexés SC1 à 2,048 Mbit/s, ou un signal SC2 à 8,448 Mbit/s, ou un signal SC3 à 34,368 Mbit/s sont transmis, et au maximum seize signaux SC1 à 2,048 Mbit/s, ou quatre signaux SC2 à 8,448 Mbit/s sont multiplexés et transmis. Le dispositif de multiplexage comprend ainsi au plus seize entrées pour des signaux SC1, quatre entrées pour des signaux SC2 et une entrée pour un signal SC3.

En variante dans le tableau 1, au lieu que le plus petit débit des signaux plésiochrones soit égal à 2,048 Mbit/s, celui-ci peut être égal à 4,096 Mbit/s.

Plus généralement, les sommes des débits des signaux plésiochrones des groupes, c'est-à-dire les produits d'entiers respectifs et du plus petit débit des signaux plésiochrones définissant les modes de fonctionnement, sont multiples entre eux.

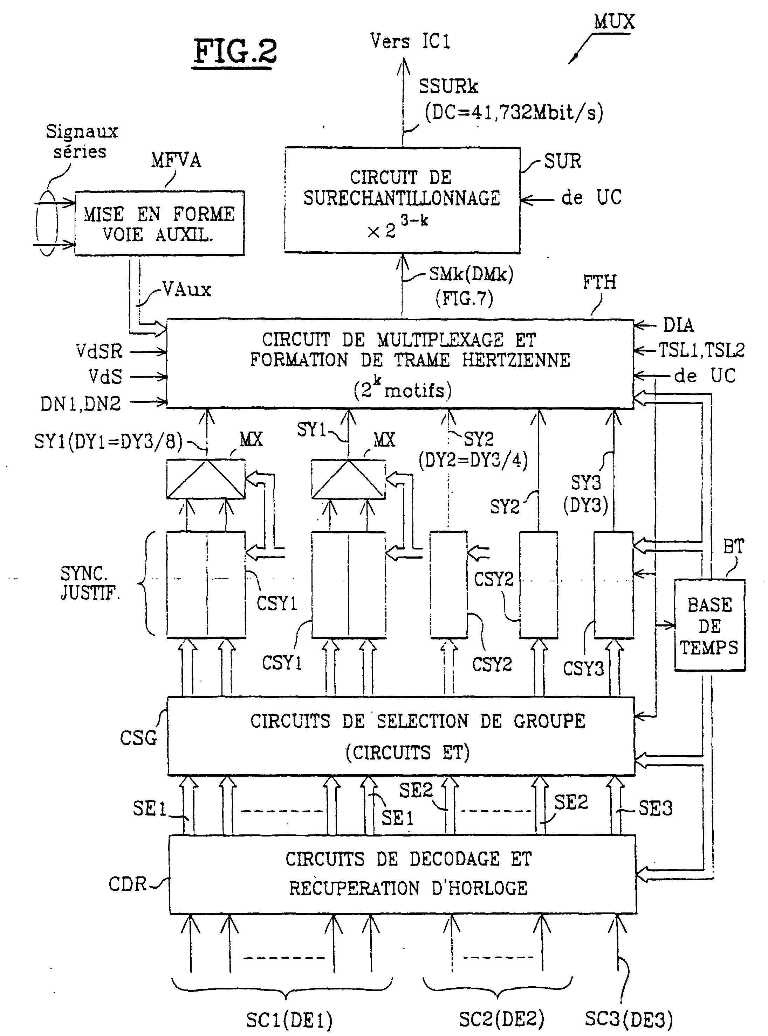

Comme montré à la figure 2, le dispositif de multiplexage numérique MUX comprend essentiellement des circuits de décodage et de récupération d'horloge CDR, un circuit de sélection de groupe CSG, des circuits de synchronisation CSY, un circuit de multiplexage et formation de trame hertzienne FTH, et un circuit de suréchantillonnage SUR.

Les circuits de décodage et de récupération d'horloge CDR convertissent respectivement les signaux plésiochrones SC1, SC2, SC3 en code de ligne en des signaux binaires plésiochrones entrants SE1, SE2, SE3 et récupèrent des signaux d'horloge correspondant aux débits de ces signaux. Le code en ligne est par exemple un code bipolaire tel que le code HDB3. Les signaux d'horloge récupérés correspondent aux débits réels des signaux plésiochrones et varient dans des limites spécifiques de part et d'autre des débits nominaux DE1 = 2,048 Mbit/s, DE2 = 8,448 Mbit/s et DE3 = 34,368 Mbit/s, en raison d'une indépendance des horloges initiales des signaux plésiochrones.

Le dispositif de multiplexage MUX comprend ainsi 16 + 4 + 1 = 21 circuits de décodage et récupération de rythme auxquels correspondent respectivement 21 circuits de synchronisation.

Le circuit de sélection de groupe CSG comprend autant de circuits ET que de circuits CDR ou CSY pour sélectionner un groupe de signaux numériques plésiochrones entrants SE1, SE2, SE3 parmi les groupes définis dans le tableau 1. La sélection de groupe est commandée par l'unité de commande UC en fonction des caractéristiques saisies au clavier du groupe sélectionné et du mode sélectionné Mk, k étant un entier compris entre 0 et 3. Les signaux plésiochrones entrants du groupe sélectionné avec les signaux d'horloge correspondants sont seulement appliqués aux circuits de synchronisation correspondants à travers le circuit CSG.

Dans les circuits de synchronisation SSY, les signaux plésiochrones entrants SE1, SE2, SE3 sont synchronisés en des signaux synchrones SY1, SY2, SY3 ayant respectivement des débits DY1, DY2, DY3 sensiblement supérieurs aux débits nominaux DE1, DE2, DE3.

Tous les circuits de synchronisation CSY1, CSY2 et CSY3 ont une structure identique et leurs fonctionnements ne diffèrent que par une programmation de diviseurs de fréquence par l'unité de commande UC afin d'adapter dans chaque circuit des signaux d'horloge au débit nominal DE1, DE2, DE3 du signal plésiochrone entrant respectif SC1, SC2, SC3. Par conséquent, les circuits de synchronisation sont interchangeables et ceux qui sont en fonctionnement sont en nombre déterminé en fonction des besoins, c'est-à-dire du nombre de signaux plésiochrones entrants. En pratique, un circuit de synchronisation CSY1, CSY2, CSY3 constitue un module avec un circuit de décodage et récupération d'horloge CDR et un circuit ET du circuit de sélection de groupe CSG. Ce caractère modulaire du dispositif de multiplexage MUX contribue notablement à une réduction du coût de fabrication du premier équipement ETR.

La synchronisation des signaux plésiochrones entrants est effectuée par justification positive et comparaison de phase avec des signaux d'horloge adéquats établis par une base de temps commune BT.

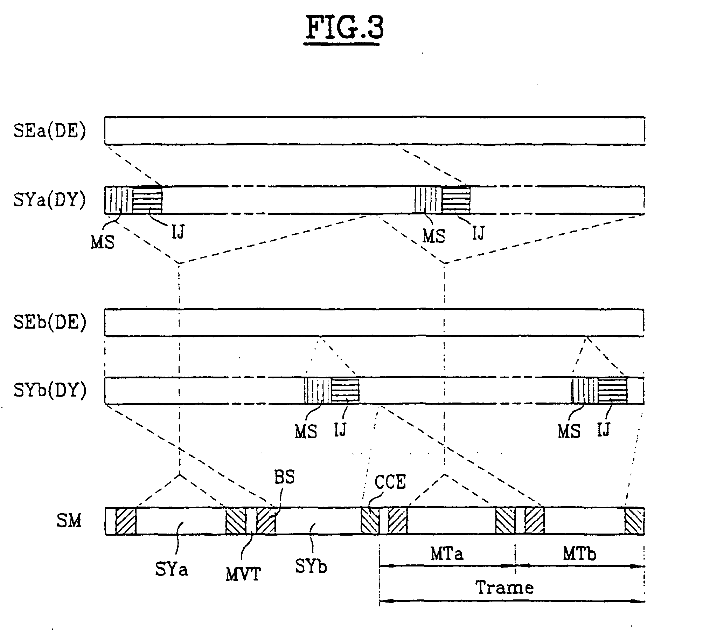

Comme montré à la figure 3, le débit DY1, DY2, DY3 du signal synchrone SY1, SY2, SY3 produit dans le circuit de synchronisation correspondant CSY1, CSY2, CSY3, dépend d'une part, d'une insertion systématique de bits d'un mot de synchronisation MS et de bits d'indication de justification IJ en nombre prédéterminé par trame du signal synchrone, et d'autre part d'une insertion de bits de justification positive BJ afin de combler la différence entre le débit constant plus élevé du signal synchrone et le débit de chaque signal entrant. Dans la figure 3, il est supposé que deux signaux plésiochrones SEa et SEb au même débit nominal DE sont à synchroniser en deux signaux synchrones SYa et SYb de débit DY dont les trames peuvent être déphasées l'une par rapport à l'autre, puis à multiplexer par motifs MTa, MTb dans une trame modulaire selon l'invention, décrite plus loin. Chaque trame de signal synchrone est divisée en plusieurs secteurs, de 3 à 6 en général, les secteurs ayant une longueur prédéterminée. Dans la suite, les longueurs de trame et de secteur ou de mot sont exprimées en bit.

Chaque secteur comprend un en-tête incluant le mot de synchronisation MS et un bit d'indication de justification IJ pour l'unique signal plésiochrone, ou deux ou plusieurs bits d'indication de justification correspondant à des signaux plésiochrones au même débit multiplexés bit à bit, tels que deux signaux SE1 selon la réalisation illustrée à la figure 2. Le premier secteur de la trame comprend après l'en-tête, un bit de justification BJ associé au signal plésiochrone entrant respectif. Les autres bits dans chacun des secteurs sont des bits d'information utile du signal plésiochrone entrant.

Selon la réalisation illustrée à la figure 2, un signal synchronisé SY1 au débit DY1 = 4,347 Mbit/s résulte de la synchronisation de deux signaux plésiochrones entrants au débit nominal DE1 = 2,048 Mbit/s à travers deux circuits de synchronisation CSY1 et un multiplexeur MX, un signal synchrone SY2 au débit de DY2 = 8,694 Mbit/s résulte de la synchronisation d'un seul signal plésiochrone entrant au débit nominal DE2 = 8,448 Mbit/s à travers un circuit de synchronisation CSY2, et un signal synchrone SY3 au débit de DY3 = 34,777 Mbit/s résulte de la synchronisation d'un seul signal plésiochrone entrant au débit nominal DE3 = 34,368 Mbit/s à travers un circuit de synchronisation CSY3. Les signaux synchrones SY1, SY2 et SY3 qui correspondent respectivement aux modes de fonctionnement M0, M1 et M3 ont des débits qui sont sous-multiples du plus grand débit de signal synchrone DY3, puisque DY1 = DY3/8 et DY2 = DY3/4, le débit d'un signal synchrone correspondant au mode M1 se déduisant en multiplexant par exemple deux signaux synchrones SY2 ou quatre signaux synchrones SY1, soit un débit de 2.DY2 = 4DY1 = DY3/2. Les débits différents, mais sous-multiples entiers entre eux, des signaux synchrones permettent de former des motifs de trame ayant une structure établie dans le circuit FTH, comme on le verra dans la suite, et commune à tous les signaux multiplex SM0 à SM3 résultant de multiplexages de type M x 2,048 Mbit/s, ou P x 8,448 Mbit/s ou M x 2,048 + P x 8,448 Mbit/s, M et P étant des entiers inférieurs ou égaux à 16 et 4. En particulier les signaux multiplex SM1, SM2 et SM3 résultent du multiplexage de signaux appartenant à des groupes de type 4(2^{k-1}-P)DE1 + P. DE2, où P est un entier compris entre 0 et 2^{k-1} ≤ 4 pour k = 1, 2 ou 3.

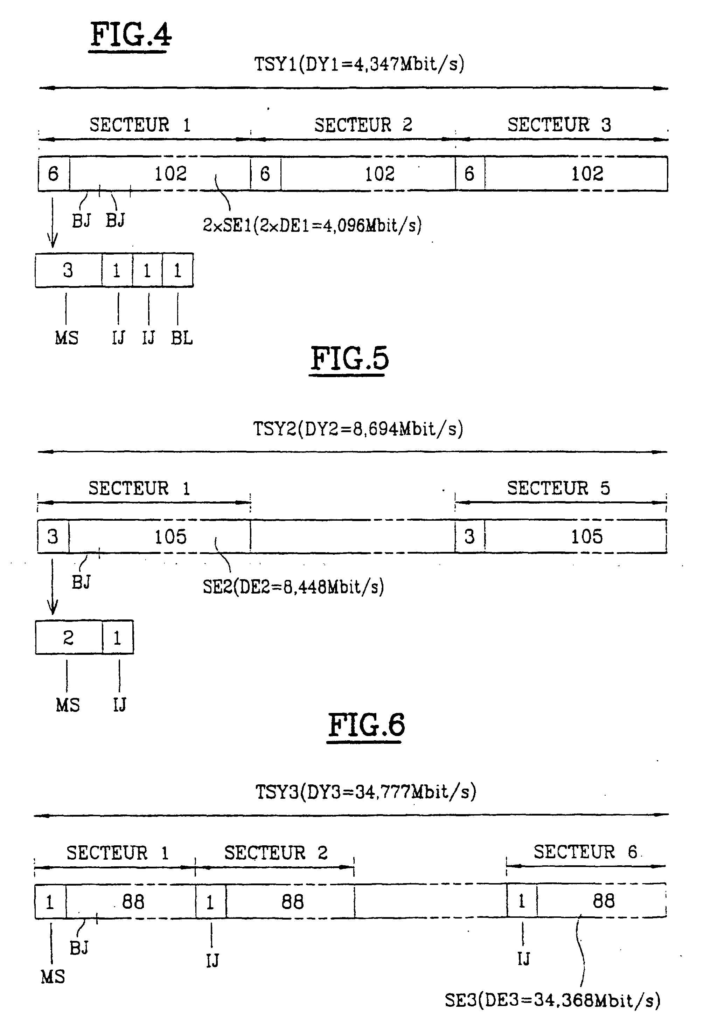

Les figures 4 à 6 montrent respectivement des trames de synchronisation TSY1, TSY2 et TSY3 pour les signaux synchrones SY1, SY2 et SY3 respectivement.

En référence à la figure 4, deux signaux plésiochrones entrants SE1 à DE1 = 2,048 Mbit/s sont synchronisés par justification positive au moyen de deux bits de justification BJ situés dans le premier secteur de la trame correspondante TSY1 dans deux circuits de synchronisation CSY1 et multiplexés bit à bit dans un multiplexeur MX. Les caractéristiques de la trame TSY1 à trois secteurs sont indiquées dans le tableau 2 ci-après.

**TABLEAU 2**

| **Caractéristiques** | **Synchronisation dans MX et CSY1** |
|---|---|
| Débit : 2 x SE1 (Mbit/s) | DE1 = 2,048 |
| Débit tramé (Mbit/s) | DY1 = 4,347 |
| Longueur de trame (bits) | 324 |
| Fréquence trame (kHz) | 13,417 |
| Nombre de secteurs | 3 |
| Composition des secteurs : - bits de 2 x SE1 | 102 |
| - bits supplémentaires | 6 |
| Affectation des bits de la trame : | |
| - bits de 2 x SE1 | 2 x 153 |
| - mot de synchronisation MS | 9 |
| - Indication de Justification IJ | 2 x 3 |
| - bits libres BL | 3 |
| Justification par SE1 : | |
| - bit de justification BJ | 1 |
| - taux minimal | 0,3484 |
| - taux nominal | 0,3591 |
| - taux maximal | 0,3697 |

Un circuit de synchronisation CSY2 traite un signal plésiochrone entrant SE2 à 8,448 Mbit/s selon un procédé de justification positive et produit un signal synchronisé SY2 ayant une trame TSY2 montre à la figure 5. Les caractéristiques de la trame TSY2 à cinq secteurs sont indiquées dans le tableau 3 ci-après.

**TABLEAU 3**

| **Caractéristiques** | **Synchronisation dans CSY2** |
|---|---|
| Débit SE2 (Mbit/s) | DE2 = 8,448 |
| Débit tramé (Mbit/s) | DY2 = 8,694 |
| Longueur de trame (bits) | 540 |
| Fréquence trame (kHz) | 16,101 |
| Nombre de secteurs | 5 |
| Composition des secteurs : - bits de SE2 | 105 |
| - bits supplémentaires | 3 |
| Affectation des bits de la trame : - bits de SE2 | 525 |
| - mot de synchronisation MS | 10 |
| - Indication de Justification IJ | 5 |
| Justification pour SE2 : | |
| - bit de justification BJ | 1 |
| - taux minimal | 0,2705 |
| - taux nominal | 0,2967 |
| - taux maximal | 0,3230 |

Un circuit CSY3 traite un signal plésiochrone entrant à 34,368 Mbit/s selon un procédé de justification positive et produit un signal synchronisé SY3 ayant une trame TSY3 montré à la figure 6. La trame TSY3 ne comprend qu'un seul bit d'un mot de synchronisation de multitrame à 10 bits inclus dans le premier des six secteurs de la trame. Ainsi une multitrame comprend 10 trames. Les caractéristiques de la trame TSY3 sont indiquées dans le tableau 4 ci-après.

**TABLEAU 4**

| | **Caractéristiques** | **Synchronisation dans CSY3** |
|---|---|---|
| Trame | Débit SE3 (Mbit/s) | DE3 = 34,368 |
| | Débit tramé (Mbit/s) | DY3 = 34, 777 |
| | Longueur de trame (bits) | 534 |
| | Fréquence trame (kHz) | 65, 126 |
| | Nombre de secteurs | 6 |
| | Composition des secteurs : - bits de SE3 | 88 |
| | - bits supplémentaires | 1 |
| | Affectation des bits de la trame : - bits de SE3 | 528 |
| | - mot de synchronisation MS | 1 |
| | - Indication de Justification IJ | 5 |
| | Justification pour SE3 : - bit de justification BJ | 1 |
| | - taux minimal | 0, 2612 |
| | - taux nominal | 0,2823 |
| | - taux maximal | 0,3034 |
| Multitrame | Longueur de multitrame (bits) | 5340 |
| | Nombre de trames | 10 |
| | Affectation des bits de la multitrame | |
| | - SE3 et IJ | 5330 |
| | - mot de synchronisation de multitrame | 10 |

En se référant à nouveau aux figures 2 et 3, chacun des signaux synchrones SY1, SY2, SY3 correspondant aux signaux plésiochrones du groupe sélectionné dans le circuit CSG est appliqué au circuit de multiplexage et de formation de trame modulaire afin qu'il soit inclus dans un ou plusieurs motifs élémentaires. Chaque motif élémentaire est conforme à la recommandation de trame MPEG2 et a une longueur de 1632 bits, quel que soit le groupe sélectionné et le débit du signal multiplex SMk. A un motif élémentaire est assigné un signal synchrone SY1 au plus petit débit DY1 = 4,347 Mbit/s, lorsque le signal SY1 appartient au groupe sélectionné ; ou bien l'équivalent d'un signal SY1 dans un signal synchrone SY2 à DY2 = 8,694 Mbit/s, soit la moitié du signal SY2 ; ou bien l'équivalent d'un signal SY1 dans un signal synchrone SY3 à DY3 = 34,777 Mbit/s, soit le huitième du signal synchrone SY3 à DY3 = 34,777 Mbit/s.

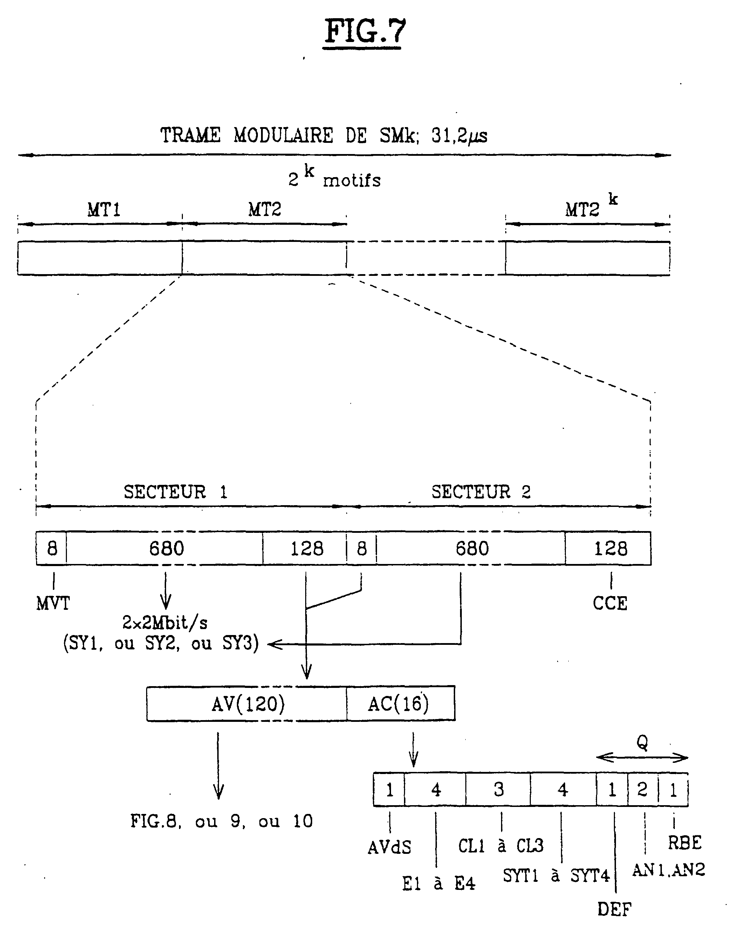

Comme montré à la figure 7, un motif élémentaire est divisé en deux secteurs à 816 bits comportant chacun 680 bits d'information utile provenant d'un signal synchrone SY1, SY2, SY3 et 136 bits supplémentaires. Dans le premier secteur, les bits supplémentaires sont répartis en un mot de verrouillage de trame MVT à 8 bits au début du secteur et en un champ d'affectation variable AV à 120 bits et d'un champ d'affectation constante à 8 bits à la fin du premier secteur. Dans le deuxième secteur de motif, les bits supplémentaires sont répartis en 8 bits du ·champ d'affectation constante au début du secteur, et en un champ de code correcteur d'erreurs CCE à 128 bits, par exemple un code de Reed Solomon, à la fin du secteur.

Dans chaque secteur, 680 emplacements sont occupés par des bits d'un seul signal synchrone équivalent à ceux de deux signaux entrants plésiochrones à bas débit de 2,048 Mbit/s. Puisqu'un motif élémentaire est attribuable à un signal synchronisé SY1 au débit DY1, deux motifs sont attribués à un signal synchrone SY2 au débit DY2 = 2 x DY1 et huit motifs sont attribués à un signal synchrone SY3 au débit DY3 = 8 x DY1. Un seul motif périodique est contenu dans le signal multiplex SM0 lorsque le mode de fonctionnement M0 est sélectionné, c'est-à-dire lorsque deux signaux plésiochrones à DE1 = 2,048 Mbit/s sont sélectionnés, et huit motifs périodiques sont contenus dans le signal multiplex SM3 lorsque le mode de fonctionnement M3 est sélectionné, c'est-à-dire lorsque notamment le signal entrant à DE3 = 34,368 Mbit/s est sélectionné.

Une trame modulaire hertzienne selon l'invention comprend ainsi 2^{k} motifs élémentaires lorsque le mode de fonctionnement Mk est sélectionné pour produire un signal multiplex SMk au débit DRk, avec 0≤k≤3. La fréquence de trame est constante et égale à DY1/1360 = DY3/(1360x8) = 3,196 kHz, tandis que la durée de motif élémentaire diminue de moitié d'un signal multiplex SMk au suivant SM(k+1).

La modularité de la trame selon l'invention est liée à la modularité des circuits de synchronisation CSY1, CSY2 et CSY3 : la structure d'un motif est constante comme celle du circuit de synchronisation, et le nombre de motifs dans la trame de durée constante et le nombre de circuits de synchronisation en service sont déterminés en fonction du nombre et des débits des signaux entrants plésiochrones à multiplexer.

Une trame modulaire selon l'invention est ainsi constituée de :
- en mode M0, 2⁰ = 1 seul motif MT1 pour un signal SY2 résultant du multiplexage de deux signaux SE1 à DE1 = 2,048 Mbit/s ;
- en mode M1, 2¹ = 2 = partie entière de DE2/(2.DE1) motifs MT1 et MT2 attribués respectivemeht à deux paires de signaux SE1 à DE1 = 2,048 Mbit/s, c'est-à-dire à deux signaux synchrones SY1, ou bien à un signal SE2 à DE2 = 8,448 Mbit/s ;
- en mode M2, 2¹ = 4 = partie entière de 2.DE2/(2.DE1) motifs attribués respectivement à quatre paires de signaux SE1 à DE1 = 2,048 Mbit/s, c'est-à-dire à quatre signaux synchrones SY1 ; ou à deux paires de signaux SE1 et un signal SE2 à DE2 = 8,448 Mbit/s ; ou à deux signaux SE2 ;
- en mode M3, 2³ = 8 = partie entière de DE3/(2.DE1) motifs attribués respectivement à 8 paires de signaux SE1 à DE1 = 2,048 Mbit/s, c'est-à-dire à huit signaux synchones SY1 ; ou 6 motifs à 6 paires de signaux SE1 et 2 motifs à un signal SE2, ou 4 motifs à 4 paires de signaux SE1, et deux paires de motifs à deux signaux SE2 ; ou 2 motifs à 2 paires de signaux SE1 et trois paires de motifs à trois signaux SE2 ; ou 4 paires de motifs à 4 signaux SE2 ; ou 8 motifs au signal SE3 à DE3 = 34,368 Mbit/s.

Les signaux multiplex SM0 à SM3 présentent des débits DM0 = 5,216 Mbit/s, DM1 = 10,433 Mbit/s, DM2 = 20,866 Mbit/s et DM3 = 41,732 Mbit/s augmentés d'un rapport constant RC = 1632/1360 = 1,2 par rapport aux débits correspondants des signaux synchrones SY1, SY2, 2 SY2 et SY3. Le plus grand débit DM3 des débits de signal multiplex SM0 à SM3 est égal au débit constant DC = 41,732 Mbit/s dans le câble de transmission CA. Quel que soit le signal multiplex SMk produit par le circuit de formation de trame FTH, la trame du signal multiplex respectif a la structure commune de trame hertzienne montrée à la figure 7. La largeur d'un bit dans la trame hertzienne est fonction du débit du signal multiplex SMk. Ces différences de largeur de bit entre signaux SMk sont compensées dans le circuit de suréchantillonnage SUR qui suréchantillonne le signal SRk avec un rapport d'échantillonnage 2^{3-k} égal à DC/DM0 = 8 pour le mode M0, DC/DM1 = 4 pour le mode M1, DC/DM2 = 2 pour le mode M2, ou DC/DM3 = 1 afin que le débit du signal à la sortie de l'équipement ETR soit toujours égal au débit constant DC = 41,732 Mbit/s. Comme montré à la figure 1, la sortie de l'équipement ETR est celle de l'interface de câble IC1 qui code le signal résultant suréchantillonné SSURk par exemple en code bipolaire HDB3 et l'adapte aux caractéristiques du câble CA. Ainsi, un bit du signal SR0, SR1, ou SR2 est répété consécutivement 8, 4, ou 2 fois dans le signal SSUR0, SSUR1, ou SSUR2 au débit DC.

272 bits supplémentaires BS dans chaque motif de trame sont répartis en un mot de verrouillage de trame à 8 bits, un champ d'affectation variable AV à 120 bits, un champ d'affectation constante AC à 16 bits, et un champ de code correcteur d'erreurs CCE à 128 bits. Les champs AV et AC garantissent une capacité de transmission minimale et variable en fonction du débit du signal multiplex SMk pour des voies de transmission supplémentaires et une exploitation identique, quel que soit le mode sélectionné et par conséquent le nombre 2^{k} de motifs de trame. En fonction de la nature d'une voie supplémentaire, le nombre de bits réservés à celle-ci est ainsi variable ou constant.

Le champ d'affectation constante AC montré à la figure 7 comprend un bit d'appel de voie de service téléphonique AVdS, quatre bits d'informations d'erreurs E1 à E4, trois bits libres CL1 à CL3, quatre bits de synchronisation de trame SYT1 à SYT4, et quatre bits de qualité Q.

Le bit AVdS à un état prédéterminé signale l'exploitation d'une voie de service téléphonique VdS, c'est-à-dire une communication en cours d'établissement ou établie dans la voie de service téléphonique VdS dont le champ utile est inclus dans le champ d'affectation variable AV et a une longueur inversement proportionnelle au débit du signal multiplex SMk. La voie VdS assure le transfert des appels entre les équipements transmetteurs et récepteurs ETR de deux stations hertziennes en communication selon l'invention, et de préférence le transfert des appels entre l'équipement ETR considéré, installé à l'intérieur du bâtiment et l'équipement d'émission et de réception à radiofréquence ERA distant de plusieurs centaines de mètre. A travers la voie de service téléphonique, une communication téléphonique est établie par du personnel de service de maintenance par exemple, sans un quelconque autre système de transmission intermédiaire.

Les bits E1 à E4 sont réservés à la collecte d'informations d'erreurs fournies par un circuit de correction d'erreurs inclus dans le circuit CRE de l'équipement ERA. Ces bits sont des informations locales, significatives d'un motif comportant des erreurs corrigée ou non, et sont insérés dans le motif suivant. Les bits E1 à E4 sont traités en réception dans l'équipement ETR de la station hertzienne pour estimer le taux d'erreurs suivant le sens de transmission correspondant de la liaison hertzienne. Par exemple, les bits E1 à E4 indiquent qu'un octet erroné a été détecté et corrigé et qu'un motif comporte un nombre d'octets erronés supérieur à la capacité de correction du code de Reed Solomon, soit au moins 9 octets, et que ces octets ne peuvent par conséquent être corrigés. Lorsque la liaison hertzienne comporte deux canaux de transmission fonctionnant en secours l'un de l'autre, des paires de bits E1-E2 et E3-E4 sont assignées à chaque canal de transmission.

Les trois bits CL1 à CL3 restent libres pour être affectés à de nouveaux services.

Les quatre bits SYT1 à SYT4 dans chaque motif sont réservés à la synchronisation de la trame modulaire hertzienne. Ces bits complètent le mot de verrouillage MVT de chaque motif et contribuent à la synchronisation d'une "multitrame" de motifs confondue en fait avec la trame modulaire.

Les quatre bits Q à la fois du champ d'affectation constante AC sont affectés à la collecte d'informations nécessaires à l'élaboration de critères de qualité de la liaison entre les équipements des stations hertziennes. Ces bits supportent les informations suivantes :
- un bit de défaut DEF pour signaler une perte de verrouillage dans le motif précédent ;
- deux bits d'anomalies AN1 et AN2 pour respectivement signaler un viol de code sur le câble CA et un nombre minimal d'octets erronés dans le motif précédent ;
- un bit de retour de trame erroné RBE correspondant au sens de réception contraire au sens d'émission de la station locale et indiquant la réception d'une trame porteuse d'une indication de motif non corrigé ou de trame comportant au moins un viol de code, ou à la réception d'une trame porteuse d'une indication de perte de verrouillage de trame distante, ou à la détection locale d'une perte de verrouillage de trame.

Toutes ces données sont insérées dans le motif ou la trame qui suit celui ou celle où l'événement correspondant survient.

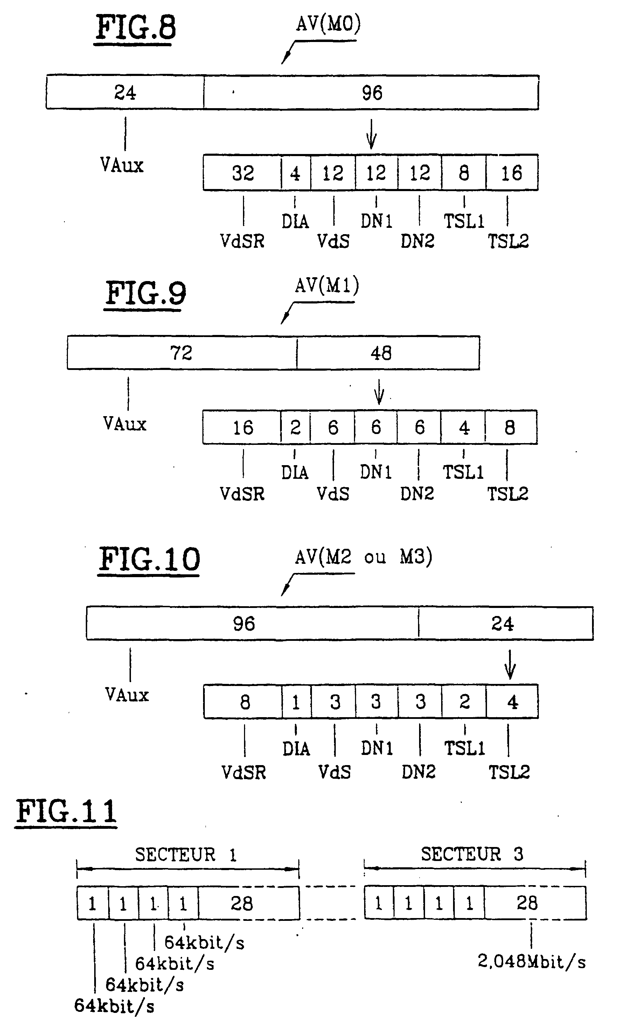

Les figures 8, 9 et 10 illustrent l'affectation des bits du champ d'affectation variable AV à 120 bits dans un motif respectivement en fonction du mode M0, du mode M1 et du mode M2 ou M3.

Au début du champ AV, 24 bits en mode M0, ou 72 bits en mode M2, ou 96 bits en mode M2 ou M3, sont réservés respectivement à une voie auxiliaire VAux qui est traitée dans un circuit de mise en forme de voie auxiliaire MFVA (figure 2) relié au circuit FTH en fonction du mode de fonctionnement sélectionné sous la commande de l'unité UC. Les données relatives à la voie auxiliaire sont transmises sous la forme d'un signal série accompagnés d'un signal d'horloge correspondant et d'une information de synchronisation de trame. Le tableau 5 suivant indique un exemple de répartition de bits et de débits de transmission pour la voie auxiliaire. En fonction de son utilisation, le signal de voie auxiliaire peut être formaté en une trame auxiliaire dont la structure n'est pas prédéterminée par la trame modulaire elle-même mais dépend seulement de l'application envisagée dans la limite des caractéristiques du tableau 5.

**TABLEAU 5**

| | **Mode (Mbit/s)** | **Fréquence motif (kHz)** | **Nbre bits** | **Débit (kbit/s)** |
|---|---|---|---|---|
| M0 | 2 x 2 | 3,196 | 24 | 76, 7 |
| M1 | 4 x 2 | 6,392 | 72 | 460,2 |
| M2 | 8 x 2 | 12,785 | 96 | 1227,4 |
| M3 | 16 x 2 | 25,571 | 96 | 2454,8 |

Selon le tableau 5, le débit maximum offert à la voie auxiliaire est augmenté au débit du signal résultant respectif dans le circuit MFVA et est égal au produit de la fréquence de trame hertzienne du signal résultant respectif par le nombre de bits disponibles pour la voie auxiliaire.

Les applications présentées ci-après sont uniquement basées sur la capacité de transmission de la voie auxiliaire et ne sont données qu'à titre d'exemple non limitatif.

Dans le mode M0, la voie auxiliaire VAux transmet un signal asynchrone à 9600 bit/s ou un signal à 64 kbit/s.

Dans le mode M1, la voie VAux achemine un signal à 256 kbit/s ou au moins quatre signaux à 64 kbit/s.

Dans le mode M2, le débit offert à la voie auxiliaire VAux est ici nettement plus élevé que dans les modes précédents et permet de transmettre jusqu'à quatre signaux à 256 kbit/s.

Dans le mode M3, le débit offert à la voie auxiliaire VAux est encore plus élevé. Il est utilisable pour transmettre un signal à 2,048 Mbit/s ainsi qu'un signal à 256 kbit/s ou quatre signaux a 64 kbit/s. Une structure de trame divisée en trois secteurs de 32 bits est montrée à la figure 11. Selon cet exemple, les quatre premiers bits de chaque secteur sont affectés respectivement aux quatre signaux à 64 kbit/s, ou affectés au signal à 256 kbit/s.

Quel que soit le mode considéré, les signaux numériques sont traités dans le circuit MFVA en augmentant leurs débits en fonction des caractéristiques de la voie auxiliaire. Les signaux asynchrones typiquement de 4800 à 19200 bit/s sont transmis par suréchantillonnage à au moins 5 fois leur débit nominal. Les voies à 64 kbit/s ou 256 kbit/s sont transmises par paquets. La voie à 2048 kbit/s, transmissible uniquement en mode M3 (16 x 2 Mbit/s), est traitée comme un signal plésiochrone entrant. Elle est insérée dans la trame auxiliaire après synchronisation sur le rythme de celle-ci par justification positive.

Toujours en référence aux figures 8 à 10, le champ d'affectation variable AV dans chaque motif comprend 32, 16 ou 8 bits en mode M0, M1, ou M2, M3 réservés à une voie de service téléphonique de réseau VdSR à 64 kbit/s. Puis 4, 2 ou 1 bit sont affectés à une voie DIA pour le dialogue entre l'unité de commande UC dans l'équipement ETR et le microcontrôleur MC dans l'équipement ERA. Le dialogue comprend, dans le sens émission ETR vers ERA, la "montée" de télécommandes telles que changement de groupe de signaux plésiochrones et caractéristiques relatifs au groupe sélectionné, réglage de puissance, et dans le sens réception ERA vers ETR, la "descente" d'indications d'états ou de défauts tels que changement de groupe, alarmes, état de commutation, niveau de champ radioélectrique reçu.

Ensuite, 12, 6 ou 3 bits sont assignés à la voie de service téléphonique VdS pour établir une communication audio entre les deux stations de la liaison hertzienne, ou entre les équipements ETR et ERA dans la station hertzienne. Les appels associés sont signalés par les bits AVdS.

12, 6 ou 3 bits au maximum sont ensuite offerts à chacune de deux voies de données numériques DN1 et DN2 dans le champ AV. Chaque voie DN1, DN2 transmet par suréchantillonnage par exemple un signal asynchrone à 9600 bit/s.

Enfin, 8, 4 ou 2 et 16, 8 ou 4 bits sont réservés respectivement à deux voies de télésurveillance longitudinale TSL1 et TSL2 qui assurent un dialogue entre des équipements dans une même liaison. La voie TSL1 est exploitée pour la gestion de la liaison hertzienne point à point et la voie TSL2 est utilisée dans le cadre de la gestion de réseau.

En se référant à nouveau à la figure 1, le signal suréchantillonné codé SSURk à 41,732 Mbit/s transmis par l'interface de câble IC1 dans le câble coaxial CA est décodé dans l'interface de câble IC2 de l'équipement à radiofréquence ERA. Le circuit de sous-échantillonnage SOE détecte chaque groupe de 2³⁻ ^{k} bits identiques consécutifs dans le signal suréchantillonné décodé, c'est-à-dire chaque groupe de 1, 2, 4 ou 8 bits pour le mode de fonctionnement M3, M2, M1 ou M0, de manière à signaler le rapport de suréchantillonnage 2^{3-k} au microcontrôleur MC et ainsi sous-échantillonner le signal transmis à travers le câble CA avec un rapport 1/2^{3-k} pour restituer le signal multiplex SMk au circuit d'émission à haute fréquence CEM à travers le filtre numérique FIE.

En fonction du rapport de suréchantillonage 2^{3-k} et donc du mode de fonctionnement Mk, le microcontrôleur MC programme le filtre numerique d'émission FIE en bande de base. Les largeurs de bande du filtre programmé sont compatibles avec le débit DMk du signal résultant restitué SMk correspondant au mode sélectionné Mk. Dans le circuit CEM, le signal ainsi filtré module une porteuse à fréquence intermédiaire qui est ensuite transposée en haute fréquence.

A la réception, un signal à trame numérique hertzienne au débit DMk selon l'invention est traité selon des opérations sensiblement réciproques de celles décrites en détail ci-dessus pour l'émission d'un tel signal.

Dans l'équipement à radiofréquence ERA, le signal à trame hertzienne reçu est amplifié, transposé et démodulé en un signal en bande de base dans le circuit de réception à haute fréquence CRE. En particulier le signal reçu est filtré par des filtres de fréquence sélectionnés dans une batterie de filtres commutables dans le circuit CRE par le microcontrôleur MC en fonction du mode de fonctionnement Mk. Le signal reçu en bande de base est alors filtré selon le mode de fonctionnement Mk par un filtre programmable inclus dans le circuit de démodulation et filtrage numérique FIR. Puis, le signal reçu en bande de base est suréchantillonné dans le circuit de suréchantillonnage SUE en fonction du rapport 2^{3-k} pour transmettre un signal numérique au débit DC = 41,732 Mbit/s dans le câble coaxial CA, codé à travers l'interface de câble IC2.

Après décodage dans l'interface de câble IC1 dans l'équipement transmetteur et récepteur ETR, le dispositif de démultiplexage DMUX sous-échantillonne le signal reçu à travers le câble CA en un signal numérique multiplex au débit DMk en fonction du rapport d'échantillonnage 2^{3-k} relatif au mode de fonctionnement Mk signalé par l'unité de commande UC. Puis, le signal multiplex reçu est déformaté et démultiplexé en les signaux synchrones correspondant au groupe sélectionné, sous la commande de l'unité UC. Les bits des champs AV, AC et CCE dans chaque motif (figure 7) du signal multiplex reçu sont pour partie traités par l'unité de commande UC pour notamment détecter des erreurs et générer des signaux d'alarme et pour partie dirigés vers les diverses voies VAux, VdSR, VdS, DN1 et DN2. Les signaux synchrones résultant du démultiplexage du signal multiplex reçu sont désynchronisés par déjustification, puis codés dans des circuits de transcodage HDB3, en des signaux correspondants plésiochrones correspondant au groupe sélectionné.

En variante, l'accès à un signal composant reçu au débit DE1, DE2 ou DE3 peut être,suffisant sous la forme du signal synchrone correspondant SY1, SY2 ou SY3. Le démultiplexage du signal multiplex reçu consiste en fait à extraire dans celui-ci les motifs correspondant au signal synchrone souhaité. Une telle extraction est d'intérêt dans une station hertzienne intermédiaire, de type relais pour la plupart des signaux transmis et de type aiguilleur pour les signaux dont les motifs sont à extraire.

## Revendications

1. Trame numérique ayant une durée prédéterminée résultant du multiplexage de signaux numériques plésiochrones, **caractérisée en ce qu'**elle comprend des motifs (MT1 à MT2^{k}) ayant une structure commune et une longueur prédéterminée qui sont indépendantes des débits de signaux numériques plésiochrones à multiplexer d'un groupe sélectionné parmi plusieurs groupes (M0 à Mk) de signaux numériques plésiochrones (SE1, SE2, SE3) ayant des débits (DE1, DE2, DE3) sensiblement multiples entre eux, les motifs (MT1 à MT2^{k}) comprenant des bits supplémentaires (MVT, AV, AC, CCE) en nombre prédéterminé et des bits en nombre prédéterminé respectivement de signaux synchrones (SY1, SY2, SY3) ayant des débits (DY1, DY2, DY3) multiples entre eux et résultant d'une synchronisation des signaux numériques plésiochrones du groupe sélectionné, à chaque signal numérique plésiochrone du groupe sélectionné étant attribué un nombre de motifs dans la trame égal à la partie entière du quotient de la division du débit dudit chaque signal numérique plésiochrone du groupe sélectionné par le plus petit débit (DE1) des signaux numériques plésiochrones.

2. Trame conforme à la revendication 1, dans laquelle ledit quotient est remplacé par le quotient de la division du débit dudit chaque signal numérique plésiochrone du groupe sélectionné par le produit du plus petit débit (DE1) des signaux numériques plésiochrones et d'un entier prédéterminé qui est égal à un sous-multiple de la partie entiere du quotient de la division du débit de signaux plesiochrones juste supérieur audit plus petit débit par ledit plus petit débit, un signal synchrone (SY1) correspondant au groupe sélectionné ayant le plus petit débit (DY1) résultant de synchronisation et multiplexage de signaux numériques plésiochrones (SE1) au plus petit débit (DE1) et en nombre égal à l'entier prédéterminé, et un seul motif étant attribué dans la trame audit signal synchrone (DY1) ayant le plus petit débit.

3. Trame conforme à la revendication 1 ou 2, dans laquelle les bits supplémentaires sont répartis en un mot de verrouillage (MVT), un champ d'affectation constante (AC), un champ d'affectation (AV) variable en fonction du débit (DMk) d'un signal multiplex (SMk) comportant la trame correspondant au groupe sélectionné, et un champ de code correcteur d'erreurs (CCE), lesdits champs ayant des longueurs respectives prédéterminées.

4. Trame conforme à la revendication 3, dans laquelle le champ d'affectation constante (AC) comprend des bits de synchronisation de trame (SYT1 à SYT4), et de préférence des bits de collecte d'informations d'erreurs (E1-E4) et/ou des bits de qualité (AQ).

5. Trame conforme à la revendication 3 ou 4, dans laquelle le champ d'affectation variable (AV) comprend des bits d'une voie auxiliaire (Vaux) dont le débit offert est d'autant plus élevé que le débit du signal multiplex (SMk) est élevé.

6. Trame conforme à l'une quelconque des revendications 3 à 5, dans laquelle le champ d'affectation variable (AV) comprend des bits (VSdP, DIA, VdS, DN1, DN2, TLS1, TLS2) qui sont réservés à un nombre prédéterminé de voies de transmission téléphonique et/ou de données et qui sont en nombre d'autant plus faible que le débit du signal multiplex (SMk) est élevé.

7. Trame conforme à l'une quelconque des revendications 3 à 6, dans laquelle le champ d'affectation variable (AV) comprend des bits assignés à une voie de service téléphonique (VdS) qui sont en nombre d'autant plus faible que le débit du signal multiplex (SMk) est élevé, et le champ d'affectation constante (AC) comprend un bit (AVdS) signalant un appel dans la voie de service téléphonique.

8. Procédé pour former une trame numérique conforme à l'une quelconque des revendications 1 à 7, **caractérisé par** les étapes suivantes :
- constituer des groupes de signaux numériques plésiochrones parmi plusieurs signaux numériques plésiochrones donnés (SE1, SE2, SE3) ayant des débits (DR1, DR2, DR3) sensiblement multiples entre eux, les sommes des débits des signaux numériques plésiochrones dans les groupes étant sensiblement multiples entre elles,
- sélectionner l'un des groupes de signaux numériques plésiochrones,
- synchroniser les signaux numériques plésiochrones dans le groupe sélectionné en des signaux synchrones (SY1, SY2, SY3) ayant des débits multiples entre eux,
- attribuer à chaque signal synchrone un nombre de motifs de structure prédéterminée dans la trame égal à la partie entière du quotient de la division du débit dudit chaque signal synchrone par le plus petit débit (DE1) des signaux numériques plésiochrones, et
- former un signal multiplex (SMk) comportant ladite trame en insérant dans chaque motif (MT1 à MT2^{k}) des bits du signal synchronisé respectif en nombre prédéterminé et des bits supplémentaires (MVT, AV, AC, CCE) en nombre prédéterminé.

9. Procédé conforme à la revendication 8, selon lequel au moins un signal synchrone comporte une trame (TSY2, TSY3) comprenant un mot de synchronisation (MS), plusieurs bits d'indication de justification (IJ) et des bits d'un seul signal numérique plésiochrone correspondant (SE2, SE3).

10. Procédé conforme à la revendication 8 ou 9, selon lequel ledit quotient est remplacé par le quotient de la division du débit dudit chaque signal synchrone par le produit du plus petit débit (DE1) des signaux numériques plésiochrones et d'un entier prédéterminé qui est égal à un sous-multiple de la partie entière du quotient de la division du débit de signaux plésiochrones juste supérieur audit plus petit débit par ledit plus petit débit, et selon lequel l'étape de synchroniser des signaux numériques plésiochrones (SE1) au plus petit débit (DE1) est remplacée par une étape de multiplexer et synchroniser les signaux numériques plésiochrones au plus petit débit par nombres égaux audit quotient de la division du débit dudit chaque signal synchrone par ledit produit en des signaux synchrones (SY1), lorsque ledit groupe sélectionné comprend des signaux numériques plésiochrones au plus petit débit en nombre égal au moins audit quotient.

11. Procédé conforme à l'une quelconque des revendications 8 à 10, comprenant les étapes de :
- fournir plusieurs moyens modulaires de synchronisation (CSY1, CSY2, CSY3) pour synchroniser les signaux numériques plésiochrones, et
- mettre en fonctionnement des moyens de synchronisation en nombre égal aux signaux numériques plésiochrones du groupe sélectionné et programmés en fonction des débits de ceux-ci.

12. Procédé conforme à l'une quelconque des revendications 8 à 11, selon lequel le débit du signal multiplex (SMk) est au plus égal au débit constant (DC) dans un support de transmission (CA), et comprenant une étape de suréchantillonner le signal multiplex (SMk) avec un rapport de suréchantillonnage (2^{3-k}) entre le débit de support de transmission (DC) et le débit du signal multiplex (DMk) de manière à transmettre un signal suréchantillonné (SSURk) audit débit constant (DC).

13. Procédé conforme à la revendication 12, comprenant une étape de sous-échantillonner le signal résultant suréchantillonné (SSURk) avec l'inverse du rapport de suréchantillonnage (2^{3-k}) et une étape de sélectionner des filtres de fréquence (CEM) en fonction du rapport de suréchantillonnage, dans un équipement d'émission et de réception à radiofréquence (ERA) d'une station hertzienne relié à un équipement transmetteur et récepteur (ETR) situé à la base de la station hertzienne à travers le support de transmission (CA) et mettant en oeuvre les étapes énoncées dans l'une quelconque des revendications 8 à 12.

14. Procédé conforme à l'une quelconque des revendications 8 à 13, selon lequel l'insertion des bits supplémentaires dans la trame comprend les insertions d'un mot de verrouillage de trame (MVT), d'un champ d'affectation constante (AC), d'un champ d'affectation (AV) variable en fonction du débit du signal multiplex, et d'un champ de code correcteur d'erreurs (CCE), lesdits champs ayant des longueurs respectives prédéterminées.

## Patentansprüche

1. Digitaler Datenübertragungsblock mit einer vorbestimmten Länge, der aus dem Multiplexen plesiochroner, digitaler Signale resultiert, **dadurch gekennzeichnet, dass** er Motive (MT1 bis MT2^{k}) umfasst, die eine gemeinsame Struktur und eine vorbestimmte Länge aufweisen, die unabhängig sind von den Datenübertragungsraten von zu multiplexenden plesiochronen, digitalen Signalen einer Gruppe, die aus mehreren Gruppen (M0 bis Mk) plesiochroner, digitaler Signale (SE1, SE2, SE3) mit Datenübertragungsraten (DE1, DE2, DE3), die im Wesentlichen Vielfache voneinander sind, ausgewählt wird, wobei die Motive (MT1 bis MT2^{k}) eine vorbestimmte Zahl zusätzlicher Bit (MVT, AV, AC, CCE) und eine jeweils vorbestimmte Zahl von synchronen Bit (SY1, SY2, SY3) umfassen, die Datenübertragungsraten (DY1, DY2, DY3) aufweisen, die Vielfache voneinander sind, und die aus einer Synchronisierung der plesiochronen, digitalen Signale der ausgewählten Gruppe resultieren, wobei jedem plesiochronen, digitalen Signal der ausgewählten Gruppe eine Anzahl von Motiven in dem Datenübertragungsblock zugewiesen ist, die gleich dem ganzzahligen Teil des Quotienten der Division der Datenübertragungsrate jedes plesiochronen, digitalen Signals der ausgewählten Gruppe durch die kleinste Datenübertragungsrate (DE1) der plesiochronen, digitalen Signale ist.

2. Digitaler Datenübertragungsblock nach Anspruch 1, bei dem der Quotient ersetzt wird durch den Quotienten der Division der Datenübertragungsrate jedes plesiochronen, digitalen Signals der ausgewählten Gruppe durch das Produkt der kleinsten Datenübertragungsrate (DE1) der plesiochronen, digitalen Signale mit einer vorbestimmten ganzen Zahl, die gleich ist einem Bruchteil des ganzzahligen Teils des Quotienten der Division der Datenübertragungsrate von plesiochronen, digitalen Signalen, die gerade größer als die kleinste Datenübertragungsrate ist, durch die kleinste Datenübertragungsrate, wobei ein der ausgewählten Gruppe entsprechendes synchrones Signal (SY1) mit der kleinsten Datenübertragungsrate (DY1) aus der Synchronisierung und dem Multiplexen von plesiochronen, digitalen Signalen (SE1) mit der kleinsten Datenübertragungsrate (DE1) resultiert, deren Zahl gleich der vorbestimmten ganzen Zahl ist, und wobei ein einziges Motiv in dem Datenübertragungsblock dem synchronen Signal (DY1) mit der kleinsten Datenübertragungsrate zugewiesen wird.

3. Datenübertragungsblock nach Anspruch 1 oder 2, bei dem die zusätzlichen Bit verteilt sind auf ein Sperrwort (MVT), ein Feld konstanter Zuordnung (AC), ein Feld mit variabler Zuordnung (AV) in Abhängigkeit von der Datenübertragungsrate (DMk) eines Multiplexsignals (SMk), das den der ausgewählten Gruppe entsprechenden Datenübertragungsblock umfasst, und ein Fehlerkorrekturkodefeld (CCE), wobei die Felder jeweils vorbestimmte Längen aufweisen.

4. Datenübertragungsblock nach Anspruch 3, bei dem das Feld konstanter Zuordnung (AC) Bit für die Datenübertragungsblocksynchronisierung (SYT1 bis SYT4) und vorzugsweise Fehlerinformationssammel-Bit (E1-E4) und/oder Gütebit (AQ) umfasst.

5. Datenübertragungsblock nach Anspruch 3 oder 4, bei dem das Feld variabler Zuordnung (AV) eines Zusatzpfads (Vaux) umfasst, dessen angebotene Datenübertragungsrate um so höher ist, je höher die Datenübertragungsrate des ausgewählten Multiplexsignals (SMk) ist.

6. Datenübertragungsblock nach einem der Ansprüche 3 bis 5, bei dem das Feld variabler Zuordnung (AV) Bit (VSdR, DIA, VdS, DN1, DN2, TLS1, TLS2) umfasst, die für eine vorbestimmte Anzahl von Telefon- oder Datenübertragungspfaden reserviert sind und die zahlenmäßig um so geringer sind, je höher die Datenübertragungsrate des Multiplexsignals (SMk) ist.

7. Datenübertragungsblock nach einem der Ansprüche 3 bis 6, bei dem das Feld variabler Zuordnung (AV) Bit umfasst, die einem Telefondienstpfad (VdS) zugeordnet sind und deren Zahl um so geringer ist, je höher die Datenübertragungsrate des Multiplexsignals (SMk) ist, und das Feld konstanter Zuordnung (AC) ein Bit (AVdS) umfasst, das einen Anruf auf dem Telefondienstpfad signalisiert.

8. Verfahren zum Ausbilden eines digitalen Datenübertragungsblocks nach einem der Ansprüche 1 bis 7, **gekennzeichnet durch** die folgenden Schritte:
- Zusammenstellen von Gruppen plesiochroner, digitaler Signale aus mehreren gegebenen plesiochronen, digitalen Signalen (SE1, SE2, SE3) mit Datenübertragungsraten (DR1, DR2, DR3), die im Wesentlichen Vielfache voneinander sind, wobei die Summen der Datenübertragungsraten der plesiochronen, digitalen Signale in den Gruppen im Wesentlichen Vielfache voneinander sind,
- Auswählen einer der Gruppen von plesiochronen, digitalen Signalen,
- Synchronisieren der plesiochronen, digitalen Signale in der ausgewählten Gruppe in synchrone Signale (SY1, SY2, SY3), die Datenübertragungsraten aufweisen, die Vielfache voneinander sind,
- Zuweisen einer Anzahl von Motiven von vorbestimmter Struktur in dem Datenübertragungsblock zu jedem synchronen Signal, wobei die Anzahl gleich dem ganzzahligen Teil des Quotienten der Division der Datenübertragungsrate jedes synchronen Signals **durch** die kleinste Datenübertragungsrate (DE1) der plesiochronen, digitalen Signale ist,
- Ausbilden eines den Datenübertragungsblock umfassenden Multiplexsignals (SMk) **durch** Einsetzen einer vorbestimmten Anzahl von Bit des jeweiligen synchronisierten Signals und einer vorbestimmten Anzahl von zusätzlichen Bit (MVT, AV, AC, CCE) in jedes Motiv (MT1 bis MT2^{k}).

9. Verfahren nach Anspruch 8, gemäß dem zumindest ein synchrones Signal einen Datenübertragungsblock (TSY2, TSY3) mit einem Synchronisierungswort (MS), mehreren Berechtigungsanzeigebit (IJ) und Bit eines einzelnen entsprechenden plesiochronen, digitalen Signals (SE2, SE3) umfasst.

10. Verfahren nach Anspruch 8 oder 9, gemäß dem der Quotient ersetzt wird durch den Quotienten der Division der Datenübertragungsrate jedes plesiochronen, digitalen Signals der ausgewählten Gruppe durch das Produkt der kleinsten Datenübertragungsrate (DE1) der plesiochronen, digitalen Signale mit einer vorbestimmten ganzen Zahl, die gleich einem Bruchteil des ganzzahligen Teils des Quotienten der Division der Datenübertragungsrate von plesiochronen, digitalen Signalen ist, die gerade größer als die kleinste Datenübertragungsrate ist, und gemäß dem der Schritt des Synchronisieren der plesiochronen, digitalen Signale (SE1) mit der kleinsten Datenübertragungsrate (DE1) ersetzt wird durch einen Schritt des Multiplexens und Synchronisierens der plesiochronen, digitalen Signale mit der kleinsten Datenübertragungsrate, deren Zahlen gleich dem Quotienten der Division der Datenübertragungsrate jedes synchronen Signals durch das Produkt ist, in synchrone Signale (SY1), wenn die ausgewählte Gruppe plesiochrone, digitale Signale mit der kleinsten Datenübertragungsrate umfasst, deren Zahl zumindest gleich dem Quotienten ist.

11. Verfahren nach einem der Ansprüche 8 bis 10, mit den folgenden Schritten:
- Bereitstellen mehrerer modularer Synchronisationsmittel (CSY1, CSY2, CSY3), um die plesiochronen, digitalen Signale zu synchronisieren, und
- in Betrieb Setzen von Synchronisationsmitteln, deren Anzahl gleich den plesiochronen, digitalen Signale der ausgewählten Gruppe ist und die in Abhängigkeit von deren Datenübertragungsraten programmiert sind.

12. Verfahren nach einem der Ansprüche 8 bis 11, gemäß dem die Datenübertragungsrate des Multiplexsignals (SMk) höchstens gleich der konstanten Datenübertragungsrate (DC) in einem Übertragungsträger (CA) ist, und mit einem Schritt des Überabtastens des Multiplexsignals (SMk) mit einem Überabtastverhältnis (2^{3-k}) zwischen der Datenübertragungsrate des Übertragungsträgers (DC) und der Datenübertragungsrate des Multiplexsignals (DMk), um ein überabgetastetes Signal (SSURk) mit der konstanten Datenübertragungsrate (DC) zu übertragen.

13. Verfahren nach Anspruch 12, mit einem Schritt des Unterabtastens des resultierenden, überabgetasteten Signals (SSURk) mit dem Inversen des Überabtastverhältnisses (2^{3-k}) und einem Schritt des Auswählens der Frequenzfilter (CEM) in Abhängigkeit von dem Überabtastverhältnis in einem Hochfrequenzsende- und -empfangsgerät (ERA) einer Funkstation, das mit einem in der Basis der Funkstation gelegenen Send- und Empfangsgerät (ETR) über den Übertragungsträger (CA) verbunden ist und das die in den Ansprüchen 8 bis 12 genannten Schritte einsetzt.

14. Verfahren nach einem der Ansprüche 8 bis 13, gemäß dem das Einsetzen der zusätzlichen Bit in den Datenübertragungsblock das Einsetzen eines Datenübertragungsblock-Sperrwortes (MVT), eines Feldes konstanter Zuordnung (AC), eines Feldes mit in Abhängigkeit von der Datenübertragungsrate des Multiplexsignals variabler Zuordnung (AV) und eines Fehlerkorrekturkodefeldes (CCE) umfasst, wobei die Felder jeweils vorbestimmte Längen aufweisen.

## Claims

1. A digital frame having a predetermined duration resulting from the multiplexing of plesiochronous digital signals, **characterized in that** it comprises patterns (MT1 to MT2^{k}) having a common structure and a predetermined length which are independent of the bit rates of the plesiochronous digital signals to be multiplexed of a group selected from several groups (M0 to Mk) of plesiochronous digital signals (SE1, SE2, SE3) having bit rates (DE1, DE2, DE3) which are substantially multiples of each other, the patterns (MT1 to MT2^{k}) including a predetermined number of additional bits (MVT, AV, AC, CCE) and a predetermined number of bits of respective synchronous signals (SY1, SY2, SY3) having bit rates (DY1, DY2, DY3) which are multiples of each other and result from synchronization of plesiochronous digital signals of the selected group, each plesiochronous digital signal of the selected group being allocated a number of patterns in the frame equal to the integer part of the quotient on dividing the bit rate of said each plesiochronous digital signal of the selected group by the lowest bit rate (DE1) of the plesiochronous digital signals.

2. A frame according to claim 1, wherein said quotient is replaced by the quotient obtained on dividing the bit rate of said each plesiochronous digital signal of the selected group by the product of the lowest bit rate (DE1) of the plesiochronous digital signals and a predetermined integer which is equal to a submultiple of the integer part of the quotient on dividing the bit rate of plesiochronous signals just higher than said smallest bit rate by said smallest bit rate, a synchronous signal (SY1) corresponding to the selected group having the lowest bit rate (DY1) resulting from synchronization and multiplexing of a number of plesiochronous digital signals (SE1) at the lowest bit rate (DE1) equal to the predetermined integer, and a single pattern being allocated in the frame to said synchronous signal (DY1) having the lowest bit rate.

3. A frame according to claim 1 or 2, wherein the additional bits are divided between an alignment word (MVT), a constant allocation field (AC), a variable allocation field (AV) varying as a function of the bit rate (DMk) of a multiplex signal (SMk) including the frame corresponding to the selected group, and an error correcting code field (CCE), said fields having respective predetermined lengths.

4. A frame according to claim 3, wherein the constant allocation field (AC) includes frame synchronization bits (SYT1 to SYT4), and preferably bits for collecting error information (E1-E4) and/or quality bits (AQ) .

5. A frame according to claim 3 or 4, wherein the variable allocation field (AV) includes bits of an auxiliary channel (Vaux) whose offered bit rate increases as the bit rate of the multiplex signal (SMk) increases.

6. A frame according to any one of claims 3 to 5, wherein said variable allocation field (AV) includes bits (VSdR, DIA, VdS, DN1, DN2, TLS1, TLS2) which are reserved for a predetermined number of telephone and/or data transmission channels and whose number decreases as the bit rate of the multiplex signal (SMk) increases.

7. A frame according to any one of claims 3 to 6, wherein the variable allocation field (AV) includes bits allocated to a telephone service channel (VdS) whose number decreases as the bit rate of the multiplex signal (SMk) increases, and the constant allocation field (AC) includes a bit (AVdS) indicating a call request on the telephone service channel.

8. A method of forming a digital frame according to any one of claims 1 to 7, **characterized by** the following steps:
- constituting groups of plesiochronous digital signals from several given plesiochronous digital signals (SE1, SE2, SE3) having bit rates (DR1, DR2, DR3) which are substantially multiples of each other, the sums of the bit rates of the plesiochronous digital signals in the group being substantially multiples of each other,
- selecting one of the plesiochronous digital signal groups,
- synchronizing the plesiochronous digital signals in the selected group to yield synchronous signals (SY1, SY2, SY3) having bit rates which are multiples of each other,
- allocating each synchronous signal a number of patterns of predetermined structure in the frame equal to the integer part of the quotient on dividing the bit rate said each synchronous signal by the lowest bit (DE1) of the plesiochronous digital signals, and
- forming a multiplex signal (SMk) including said frame by inserting in each pattern (MT1 to MT2^{k}) a predetermined number of bits of the respective synchronized signal and a predetermined number of additional bits (MVT, AV, AC, CCE).

9. A method according to claim 8, wherein at least one synchronous signal includes a frame (TSY2, TSY3) including a synchronization word (MS), several stuffing indication bits (IJ) and bits of a single corresponding plesiochronous digital signal (SE2, SE3).

10. A method according to claim 8 or 9, wherein said quotient is replaced by the quotient obtained on dividing the bit rate said each synchronous signal by the product of the lowest bit rate (DE1) of the plesiochronous digital signals and a predetermined integer which is equal to a submultiple of the integer part of the quotient on dividing the bit rate of the plesiochronous signals just higher than said lowest bit rate by said lowest bit rate, and wherein the step of synchronizing plesiochronous digital signals (SE1) to the lowest bit rate (DE1) is replaced by a step of multiplexing and synchronizing the plesiochronous digital signals at the lowest bit rate into synchronous signals (SY1) in numbers equal to said quotient on dividing the bit rate of said each synchronous signal by said product when said selected group includes plesiochronous digital signals at the lowest bit rate in a number at least equal to said quotient.

11. A method according to any one of claims 8 to 10, including the steps of:
- providing several modular synchronizing means (CSY1, CSY2, CSY3) for synchronizing the plesiochronous digital signals, and
- operating a number of synchronization means equal to the number of plesiochronous digital signals of the selected group and programmed in accordance with the bit rates thereof.

12. A method according to any one of claims 8 to 11, wherein the bit rate of the multiplex signal (SMk) is at most equal to the constant bit rate (DC) on a transmission medium (CA), and including a step of oversampling the multiplex signal (SMk) with an oversampling ratio (2^{3-k}) between the bit rate of the transmission medium (DC) and the bit rate of the multiplex signal (DMk) to transmit an oversampled signal (SSURk) at said constant bit rate (DC).

13. A method according to claim 12, comprising a step of undersampling the oversampled resultant signal (SSURk) with the reciprocal of the oversampling ratio (2^{3-k}) and a step of selecting filters (CEM) as a function of the oversampling ratio, in a radio transceiver equipment (ERA) of a radio station connected to a transceiver equipment (ETR) situated at the base of the radio station through the transmission medium (CA) and carrying out the steps stated in any one of claims 8 to 12.

14. A method according to any one of claims 8 to 13, wherein inserting the additional bits into the frame includes the inserting a frame alignment word (MVT), a constant allocation field (AC), a variable allocation field (AV) which varies as a function of the bit rate of the multiplex signal, and an error correcting code field (CCE), said fields having respective predetermined lengths.
